(19) Europäisches Patentamt
European Patent Office
Office européen des brevets

(11) **EP 2 234 874 B1**

(12) **FASCICULE DE BREVET EUROPEEN**

(45) Date de publication et mention
de la délivrance du brevet:
**07.03.2012 Bulletin 2012/10**

(21) Numéro de dépôt: **09703720.4**

(22) Date de dépôt: **15.01.2009**

(51) Int Cl.:
***B64C 1/14*** *(2006.01)*

(86) Numéro de dépôt international:
**PCT/FR2009/050052**

(87) Numéro de publication internationale:
**WO 2009/092964 (30.07.2009 Gazette 2009/31)**

(54) **PORTE D'AERONEF PRESSURISE EQUIPE D'UN VOLET DE MISE A L'AIR LIBRE**

FLUGZEUGTÜR MIT DRUCKAUSGLEICHSÖFFNUNG

AIRCRAFT DOOR WITH PRESSURE VENT

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **21.01.2008 FR 0850356**

(43) Date de publication de la demande:
**06.10.2010 Bulletin 2010/40**

(73) Titulaire: **AIRBUS OPERATIONS**
**31060 Toulouse (FR)**

(72) Inventeur: **DEPEIGE, Alain**
**31170 Tournefeuille (FR)**

(74) Mandataire: **Ilgart, Jean-Christophe et al**
**BREVALEX**
**95 rue d'Amsterdam**
**75378 Paris Cedex 8 (FR)**

(56) Documents cités:
**FR-A- 2 686 568     US-A- 5 337 977**

EP 2 234 874 B1

## Description

### DOMAINE TECHNIQUE

L'invention concerne une porte destinée à équiper un aéronef pressurisé.

La porte d'aéronef selon l'invention peut être utilisée en particulier pour équiper toutes les issues des aéronefs, que ces issues soient destinées à l'entrée et à la sortie des passagers, au service, au passage des marchandises, etc.

### ETAT DE LA TECHNIQUE ANTERIEURE

Les portes des aéronefs doivent répondre à de nombreuses exigences concernant notamment leur résistance mécanique, leur étanchéité, et leur sécurité. Certaines de ces exigences sont d'ailleurs fixées par la réglementation internationale en vigueur.

Par exemple, il est essentiel d'empêcher l'ouverture intempestive d'une porte d'aéronef lorsque l'aéronef est en vol, notamment sous l'action volontaire d'un passager. Pour cela, il est classique d'utiliser des dispositifs de verrouillage automatiques, commandés électriquement à partir d'une pluralité de signaux indiquant que l'aéronef est en vol. Ces signaux peuvent correspondre, par exemple, à la position « rentrée » des trains d'atterrissage, à la valeur de la pression interne de l'aéronef, ou encore au fonctionnement des moteurs. Ils peuvent également dépendre de la différence de pression entre l'intérieur et l'extérieur de l'aéronef, ou de la vitesse de l'aéronef. Cependant, en vol de croisière prolongé, le risque de givrage de ces dispositifs de verrouillage est important. Aussi est-il habituellement recommandé de les désactiver au-dessus d'une altitude déterminée, et de les maintenir activés en dessous de cette altitude. Par ailleurs, ils doivent être également désactivés avant l'atterrissage pour garantir l'ouverture de la porte en cas de secours. On comprend aisément que le fonctionnement de ce type de dispositif est relativement complexe, et que le blocage éventuel du dispositif présente un risque de sécurité particulièrement important. De plus, il s'agit d'un dispositif dédié uniquement au verrouillage de la porte, ce qui se traduit par un ajout de masse qui pénalise les performances de l'aéronef.

D'autres problèmes concernent la pressurisation de l'aéronef ou d'une cabine d'aéronef.

L'un de ces problèmes découle de la pression résiduelle qui peut éventuellement subsister à l'intérieur de l'aéronef avant l'ouverture de la porte. Cette pression résiduelle peut en effet provoquer un mouvement brutal de la porte vers l'extérieur lors de son ouverture, ce qui risque d'entraîner un accident de personnes, notamment si l'ouverture de la porte s'effectue depuis l'extérieur de l'aéronef.

Par ailleurs, la mise en pression interne à l'aéronef doit normalement être limitée à une valeur sans danger, tant que la porte n'est pas complètement fermée et verrouillée.

Le document FR2686568 décrit une porte d'aéronef munie d'un volet de mise à l'air libre apte à fermer une fenêtre d'ouverture. La porte est conçue de sorte que, d'une part, l'ouverture de la porte ne peut avoir lieu tant que le volet reste fermé. Et d'autre part, la fermeture du volet n'est possible qu'après fermeture et verrouillage de la porte. Deux poignées de commande sont alors prévues, l'une pour la commande d'ouverture et de fermeture de la porte et l'autre pour la manoeuvre du volet. Ces deux poignées sont agencées de telle manière que la poignée du volet, en position de fermeture, bloque la poignée de la porte dans sa position de fermeture et verrouillage. Par ailleurs, la poignée de la porte, en position d'ouverture, bloque la poignée du volet dans sa position d'ouverture.

Certains problèmes restent toutefois non résolus par cette solution technique proposée jusqu'à ce jour.

L'un de ces problèmes concerne l'ouverture du volet de mise à l'air libre. Habituellement, ce volet est ouvert dès le déverrouillage de la porte et reste ouvert tant que la porte est ouverte. Aussi, le risque d'ingestion de précipitations (pluie, neige) à l'intérieur de l'aéronef, c'est-à-dire l'entrée de précipitations par l'intermédiaire de la fenêtre d'ouverture alors non obturée par le volet, est important. Les précipitations peuvent alors geler au niveau des dispositifs d'ouverture et de fermeture de la porte et entraîner par conséquent le blocage de la porte d'aéronef. L'ouverture ultérieure de la porte, éventuellement lors de secours, n'est donc plus assurée.

L'état de la technique est illustré par le document US-A-5 337 977.

### EXPOSÉ DE L'INVENTION

Le but de la présente invention est de remédier à l'inconvénient précité et notamment de proposer une porte d'aéronef pressurisé qui minimise les risques d'ingestion de précipitations à l'intérieur de l'aéronef, tout en assurant la mise à l'air libre de l'aéronef avant le déverrouillage de la porte.

Pour ce faire, l'invention concerne une porte d'aéronef pressurisé comprenant au moins un organe de commande d'ouverture et de fermeture de la porte conçu pour placer successivement, durant une course d'ouverture entre une première position d'extrémité et une seconde position d'extrémité sensiblement opposée à la première, la porte en position fermée / verrouillée, en position fermée / déverrouillée, puis en position ouverte, au moins une fenêtre d'ouverture normalement fermée par un volet de mise à l'air libre, l'organe de commande étant relié au volet par un dispositif de commande du volet.

Selon l'invention, ledit dispositif de commande du volet est commandé par ledit organe de commande, et conçu de sorte que le volet occupe successivement, durant la course d'ouverture de l'organe de commande :

- une position d'obturation de ladite fenêtre d'ouverture lorsque l'organe de commande occupe sa première position d'extrémité plaçant la porte dans sa position fermée / verrouillée ;
- une position au moins partiellement ouverte avant que la porte n'occupe sa position fermée / déverrouillée ;
- puis à nouveau la position d'obturation de ladite fenêtre d'ouverture lorsque l'organe de commande occupe sa deuxième position d'extrémité plaçant la porte dans sa position ouverte.

Ainsi, l'invention permet effectivement de minimiser les risques d'ingestion de précipitations à l'intérieur de l'aéronef, tout en assurant la mise à l'air libre de l'aéronef avant le déverrouillage de la porte. En effet, lorsque la porte occupe sa position ouverte, le volet occupe une position d'obturation de ladite fenêtre d'ouverture de manière à éviter toute ingestion de précipitations à l'intérieur de l'aéronef. Par ailleurs, lors de l'ouverture de la porte et avant l'étape de déverrouillage, le volet occupe une position ouverte permettant la mise à l'air libre de l'aéronef. Tout risque d'ouverture brusque de la porte sous l'effet d'une pression résiduelle est ainsi évité.

De préférence, le volet occupe une position d'ouverture maximale lorsque l'organe de commande occupe une position intermédiaire, ladite position intermédiaire étant située entre la première position d'extrémité et la deuxième position d'extrémité et plaçant la porte dans sa position fermée / déverrouillée.

De préférence, le volet s'ouvre progressivement durant la course d'ouverture de l'organe de commande entre la première position d'extrémité et la position intermédiaire.

De préférence, le volet se ferme progressivement durant la course d'ouverture de l'organe de commande entre la position intermédiaire et la deuxième position d'extrémité.

Avantageusement, le volet occupe sa position d'obturation de ladite fenêtre d'ouverture avant que l'organe de commande n'occupe sa deuxième position d'extrémité plaçant la porte dans sa position ouverte. Ainsi, lors du positionnement de l'organe de commande dans sa deuxième position d'extrémité, un effort de fermeture est appliqué au volet qui tend à fermer davantage le volet, ce qui améliore l'étanchéité de l'obturation de la fenêtre d'ouverture par le volet.

De préférence, le dispositif de commande du volet est conçu de sorte que, l'organe de commande occupant sensiblement sa première position d'extrémité et le volet occupant sensiblement sa position d'obturation, un effort de pression appliqué au volet dans le sens de la fermeture du volet par une pression interne de l'aéronef supérieure à une pression externe crée un moment de fermeture appliqué à l'organe de commande et orienté de manière à maintenir l'organe de commande dans sa première position d'extrémité.

Ainsi, lorsque l'aéronef est pressurisé et présente une pression interne à l'aéronef supérieure à la pression externe, notamment en vol et particulièrement à haute altitude, la différence de pression exerce un effort de pression important sur le volet qui est directement transmis à l'organe de commande de manière à le maintenir dans sa première position d'extrémité. Ainsi, la pression différentielle empêche toute manoeuvre de l'organe de commande et maintient la porte dans sa position fermée / verrouillée. Cela permet d'éviter toute ouverture intempestive, volontaire ou non, de la porte d'aéronef lors de ces conditions de vol.

L'invention présente en outre l'avantage supplémentaire d'éviter d'une part l'utilisation de moyens de verrouillage dédiés au verrouillage de la porte en vol, et d'autre part de supprimer la nécessité d'utiliser une poignée spécifiquement destinée à la manoeuvre du volet. Cela permet de répondre à l'exigence d'économie de masse, essentielle pour les performances de l'aéronef.

De préférence, le volet présentant un axe de rotation sensiblement disposé en une extrémité du volet et ledit effort de pression appliqué au volet créant un moment de pression par rapport audit axe de rotation, ledit moment de fermeture appliqué à l'organe de commande présente une intensité supérieure à celle dudit moment de pression. Ainsi, l'effort de pression exercé par la différence de pression sur le volet est amplifié et transmis directement à l'organe de commande.

Pour amplifier l'effort de pression auquel est soumis le volet à l'organe de commande, il est avantageux que le dispositif de commande comprenne un engrenage.

Dans un mode de réalisation de l'invention, le volet contient un hublot d'observation.

D'autre part, il est avantageux que la porte comprenne une pluralité de fenêtres d'ouverture normalement fermées chacune par un volet de mise à l'air libre. Ainsi la surface permettant la mise à l'air libre de l'aéronef est plus importante. Cela permet de diminuer la durée nécessaire à l'égalisation des pressions interne et externe et permet ainsi d'optimiser la durée minimale d'ouverture de la porte.

D'autres avantages et caractéristiques de l'invention apparaîtront dans la description détaillée non limitative ci-dessous.

**BRÈVE DESCRIPTION DES DESSINS**

On décrira à présent, à titre d'exemples non limitatifs, des modes de réalisation de l'invention, en se référant aux dessins annexés, dans desquels :

La figure 1 est une vue en perspective illustrant de manière schématique une porte d'aéronef pressurisé, réalisée selon l'invention, vue depuis l'intérieur de l'aéronef ;
La figure 2 est une vue en coupe selon le plan vertical illustrant schématiquement une partie de la porte de la figure 1 ;

Les figures 3A à 3C sont des vues en coupe illustrant la partie de porte de la figure 2 pour trois positions de l'organe de commande de la porte.

**EXPOSÉ DÉTAILLÉ D'UN MODE DE RÉALISATION PREFERE**

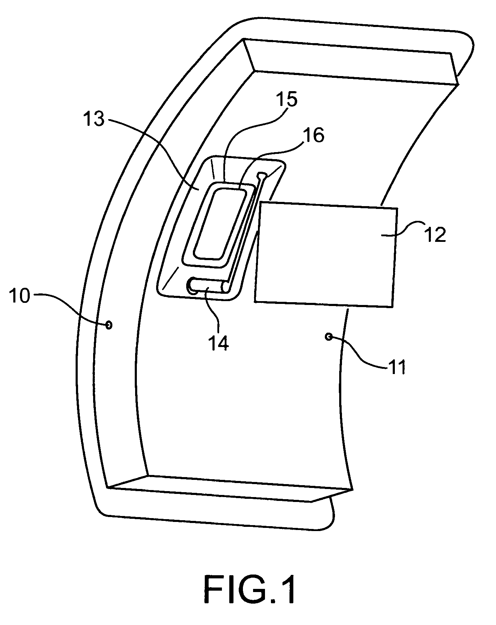

Sur la figure 1 est représentée de façon schématique une porte d'aéronef plus précisément destinée à l'accès des passagers dans un aéronef pressurisé. Ce type de porte ne constitue cependant qu'un exemple puisque, comme on l'a déjà indiqué, l'invention s'applique indifféremment à toutes les portes d'accès ou issues de l'aéronef, que ces portes soient destinées aux passagers, au personnel de service, aux bagages, etc.

La porte illustrée sur la figure 1 comprend une structure de porte monobloc, désignée par la référence 10, ainsi qu'une structure d'encadrement (non représentée). Un habillage intérieur 11 est prévu qui vient recouvrir la structure de porte 10.

La structure de porte 10 comporte sur sa partie latérale des butées (non représentées) qui sont en appui sur des butées en vis-à-vis liées à la structure d'encadrement, lorsque la porte occupe sa position fermée et verrouillée. Cette caractéristique permet d'effectuer le transfert des charges de pression de la structure de porte 10 à la structure d'encadrement, puis au fuselage de l'aéronef. En d'autres termes, les butées formées sur la partie latérale de la structure de porte 10 sont pressées vers l'extérieur de l'aéronef contre les butées portées par la structure d'encadrement, sous l'effet de la différence de pression qui existe en vol entre l'intérieur de l'aéronef et l'atmosphère extérieure.

La structure de porte 10 est équipée de moyens d'ouverture et de fermeture de la porte qui déterminent la cinématique suivie par cette structure de porte 10 lors de son ouverture et de sa fermeture et qui assurent son verrouillage sur l'encadrement de porte lorsque la porte est fermée. Ces moyens d'ouverture et de fermeture ne sont pas représentés sur la figure 1, car ils ne font pas partie de l'invention et peuvent présenter des formes très diverses selon les constructeurs.

A titre d'exemple nullement limitatif, la cinématique suivie par la structure de porte 10 lors de son ouverture peut présenter plusieurs phases successives. Ainsi, au cours d'une phase préparatoire destinée à assurer le décollement des butées portées par la structure de porte 10 par rapport aux butées portées par la structure d'encadrement, la structure de porte 10 recule très légèrement (par exemple environ 2 mm) vers l'intérieur de l'aéronef. Après ce recul initial, la structure de porte 10 se déplace de façon curviligne vers le haut sur une distance permettant aux butées de la structure de porte de se dégager des butées de la structure d'encadrement. Enfin, la structure de porte quitte sa structure d'encadrement et se déplace à la fois vers l'extérieur et vers l'avant de l'aéronef suivant un mouvement de translation circulaire déterminé notamment par le bras support 12.

Dans le mode de réalisation représenté dans les figures, les moyens d'ouverture et de fermeture de la porte peuvent être actionnés soit depuis l'intérieur de l'aéronef par la poignée de commande interne 14 de la porte, soit depuis l'extérieur de l'aéronef par une poignée de commande externe (non représentée). La poignée de commande externe est normalement logée dans un évidemment formé dans la surface extérieure de la structure de porte 10. La poignée de commande externe est alors embrayée sur l'arbre portant la poignée de commande interne par l'intermédiaire d'un engrenage ou d'un ensemble de bielles et de leviers montés sur des arbres. Par la suite de la description, il ne sera question que de la poignée de commande interne 14. Cependant, l'invention n'est pas limitée à l'actionnement du volet 15 par la poignée de commande interne 14, mais s'étend à tout organe de commande d'ouverture et de fermeture de la porte assurant également la commande du dispositif de commande du volet 15. Ainsi, la poignée de commande externe, dans la mesure où elle commande le dispositif de commande du volet 15, rentre dans le cadre de la portée de l'invention.

Conformément à l'invention, on prévoit dans la structure de porte 10 au moins une fenêtre d'ouverture 13 traversant l'habillage intérieur 11 et la structure de porte 10 sur toute son épaisseur, située par exemple à proximité de la poignée de commande interne 14. Cette fenêtre d'ouverture 13 est normalement fermée de façon étanche par un volet 15 de mise à l'air libre de l'aéronef. Le volet 15 est articulé sur la structure de porte 10 et s'ouvre vers l'intérieur de l'aéronef. La figure 1 montre un volet 15 de forme sensiblement rectangulaire et orienté de manière verticale. D'autres formes et dispositions sont possibles, comme par exemple un volet de forme sensiblement rectangulaire et horizontal, situé dans la partie supérieure de la structure de porte 10. Le volet 15 peut contenir un hublot d'observation, permettant à un opérateur d'observer l'extérieur de l'aéronef, par exemple avant son ouverture afin d'éviter tout accident.

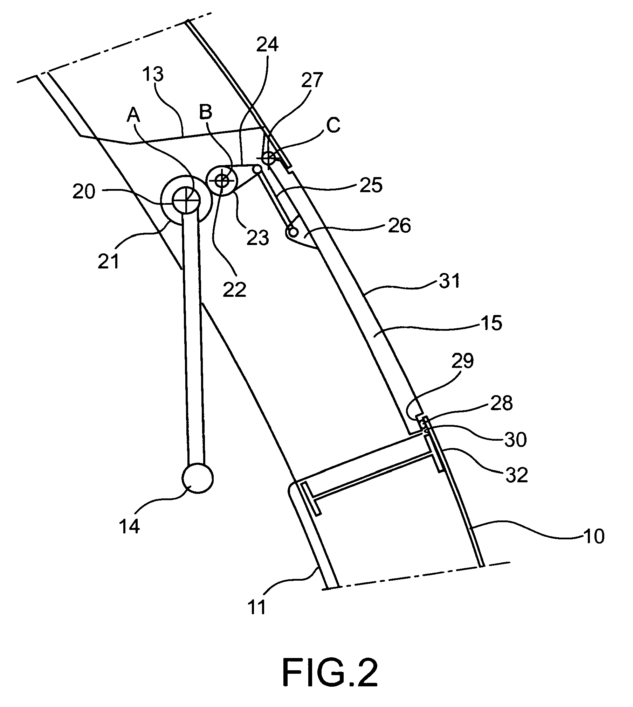

Le dispositif de commande du volet va maintenant être décrit en détail en référence à la figure 2. La poignée de commande interne 14 de la porte est supportée de façon rotative par la structure de porte 10 autour d'un premier axe A sensiblement horizontal lorsque l'assiette de l'avion est horizontale. La poignée de commande interne 14 est apte à occuper deux positions d'extrémité, opposées l'une de l'autre, et une position intermédiaire qui peut être située sensiblement à mi-course entre les deux positions d'extrémité. Dans la première position d'extrémité, la poignée de commande interne 14 est située sensiblement vers le bas, sous la hauteur de l'axe A, et correspond à l'état fermé / verrouillé de la porte d'aéronef. Dans la deuxième position d'extrémité, la poignée de commande interne 14 est située sensiblement vers le haut, au-dessus de la hauteur de l'axe A, et correspond à l'état d'ouverture de la porte. L'angle mesuré au niveau de l'axe A et formé par la poignée de commande interne 14 dans la première position d'extrémité et la poignée 14 dans sa deuxième position d'extrémité peut être de l'ordre de 120 degrés. Il est à noter que la poignée de commande interne 14, dans sa course d'ouverture entre la première position d'extrémité et la deuxième position d'extrémité et passant par la position intermédiaire, place successivement la porte dans une position fermée / verrouillée, dans une position fermée / déverrouillée puis dans une position ouverte. Plus précisément, dans la position fermée / verrouillée et comme décrit précédemment, les butées de la partie latérale de la porte sont en appui sur des butées en vis-à-vis liées à la structure d'encadrement. Dans la position fermée / déverrouillée, la structure de la porte a très légèrement reculé vers l'intérieur de l'aéronef et les butées de la porte ne sont plus en contact avec les butées de la structure d'encadrement. La porte est alors en mesure de se déplacer de façon curviligne vers le haut de manière à dégager les butées de la structure de porte des butées de la structure d'encadrement. Enfin, dans sa position ouverte, la porte a achevé son déplacement vers l'extérieur et vers l'avant de l'aéronef. L'issue est alors libre de manière à permettre l'entrée ou la sortie de personnes ou de matériel.

La poignée de commande interne 14 permet d'entraîner en rotation autour de l'axe A un arbre 20. L'arbre 20 porte un pignon 21 qui engrène sur un pignon 23. Ce pignon 23 est porté par un arbre 22 articulé sur un axe B parallèle à l'axe A, et monté sur la structure 10 de la porte. L'axe B est situé sensiblement au même niveau que l'axe A, mais il est décalé vers l'extérieur de l'aéronef par rapport à ce dernier.

Un levier 24 est monté solidaire de l'arbre 22 et est relié en son extrémité opposée à l'arbre 22 à une extrémité d'une bielle de commande 25. L'autre extrémité de la bielle de commande 25 est reliée à un palier 26 fixé au volet 15.

Le volet 15 de mise à l'air libre vient obturer la fenêtre d'ouverture 13. Il peut être monté de manière rotative sur la structure de porte 10 par l'intermédiaire d'une charnière 27 dont l'axe C est orienté parallèlement aux axes A et B. Le volet 15 est conçu de manière à occuper une position d'obturation de la fenêtre, ou position fermée, et une position ouverte. En position fermée, le volet 15 obture de manière étanche la fenêtre d'ouverture 13 de la structure de porte 10. Pour assurer l'étanchéité de la fermeture de la fenêtre d'ouverture 13, le volet 15 comporte un joint d'étanchéité 28 disposé sur la bordure extérieure 29 du volet 15 de manière à venir au contact de la bordure intérieure 30 de la fenêtre d'ouverture 13. Plus précisément, la partie extérieure 31 du volet 15 comprend en sa périphérie une échancrure 31 comportant le joint d'étanchéité 28. La profondeur de l'échancrure dans le sens de l'épaisseur du volet est définie de sorte que la partie extérieure 31 du volet 15 vient, en position de fermeture du volet 15, dans le prolongement de la bordure extérieure 32 de la fenêtre d'ouverture 13. Cela permet d'assurer une bonne aérodynamique du volet 15 en position fermée. Le volet 15 peut occuper une position ouverte dans laquelle la bordure extérieure 29 du volet 15 n'est plus en contact avec la bordure intérieure 30 de la fenêtre d'ouverture 13. La position ouverte du volet 15 permet le passage d'un flux d'air au travers de la fenêtre d'ouverture 13 de manière à équilibrer les pressions entre l'intérieur et l'extérieur de l'aéronef.

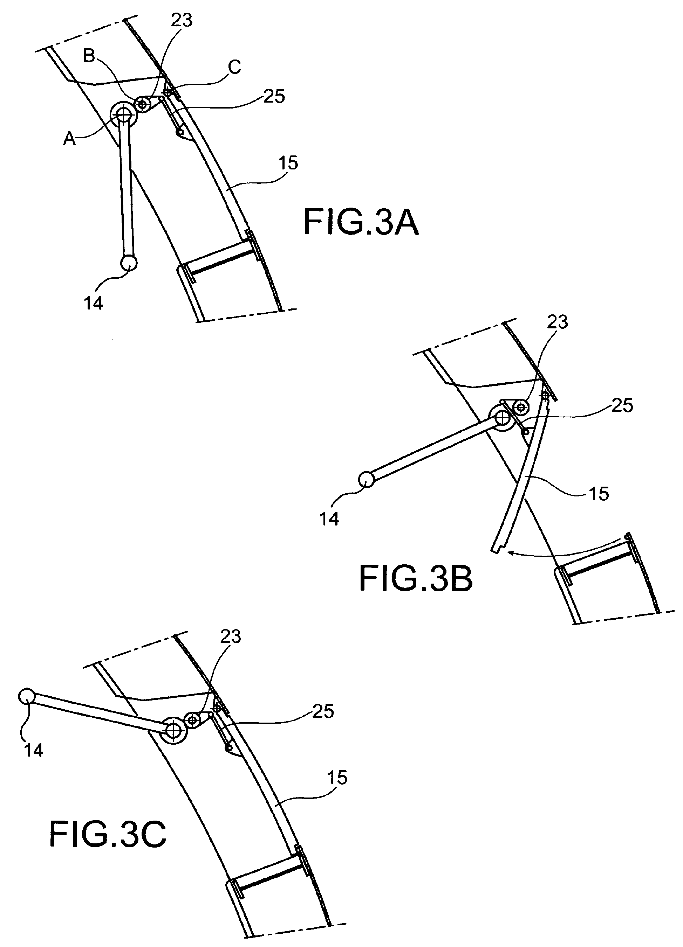

L'actionnement d'ouverture de la poignée de commande interne 14 va maintenant être décrit en référence aux figures 3A à 3C.

Comme le montre la figure 3A, la poignée de commande interne 14, occupant initialement la première position d'extrémité plaçant la porte dans la position fermée / verrouillée, est disposée sensiblement à proximité de la structure de porte 10, en dessous de l'axe A. Dans cet état, le volet 15 obture la fenêtre d'ouverture 13 lorsqu'il existe une pression résiduelle à l'intérieur de l'aéronef, c'est-à-dire une pression interne à l'aéronef supérieure à la pression externe, le volet 15 subit un effort de pression qui tend à le maintenir fermé et maintient la poignée de commande interne 14 dans la première position d'extrémité. Lorsque la différence de pression entre l'intérieur et l'extérieur de l'aéronef n'est pas trop élevée, par exemple inférieure à 0,25 psi, l'effort de pression exercé sur le volet 15 n'excède pas une valeur rendant impossible l'actionnement d'ouverture de la poignée 14.

Dans ce cas, lorsqu'un opérateur actionne la poignée de commande interne 14 dans le but d'ouvrir la porte d'aéronef, il exerce un effort sur la poignée 14 de manière à entraîner la poignée 14 en rotation autour de l'axe A dans le sens horaire selon la figure 3A. La poignée 14 quitte la première position d'extrémité dans laquelle la porte est placée dans une position fermée / verrouillée, et tourne autour de l'axe A en direction de la position intermédiaire. Le pignon 21 tourne autour de l'axe A dans le sens horaire selon la figure 3A et entraîne le pignon 23 en rotation autour de l'axe B dans le sens antihoraire. Le pignon 23, par l'intermédiaire du levier 24 exerce une force sur la bielle de commande dirigée vers le haut, qui, par l'intermédiaire du palier 26, tend à entraîner en rotation le volet 15 autour de l'axe C. Dans la course d'ouverture de la poignée de commande 14 entre la première position d'extrémité et la position intermédiaire, le volet 15 s'ouvre progressivement.

Dans la figure 3B, la poignée de commande interne 14 occupe la position intermédiaire plaçant ainsi la porte dans sa position fermée / déverrouillée. La position intermédiaire peut être située sensiblement à mi-course entre la première position d'extrémité et la seconde position d'extrémité. Le levier 24 est sensiblement orienté vers le haut et vers l'intérieur de l'aéronef, plaçant ainsi le volet 15 en position d'ouverture maximale. Puis, la poignée de commande 14 quitte la position intermédiaire et tourne en direction de la deuxième position d'extrémité. La rotation du pignon 23 transmet un effort de fermeture au volet 15. Le volet se ferme alors progressivement.

Dans la figure 3C, la poignée de commande interne 14 occupe la deuxième position d'extrémité plaçant ainsi la porte dans sa position ouverte. Le volet 15 occupe alors sa position d'obturation de la fenêtre d'ouverture 13. Eventuellement, le volet 15 peut occuper sa position d'obturation avant que la poignée 14 ne soit dans la deuxième position d'extrémité. Ainsi l'effort appliqué à la poignée de commande 14 de manière à placer la poignée 14 dans sa deuxième position d'extrémité est transmis au volet 15 de manière à exercer un effort de fermeture qui vient améliorer l'étanchéité de l'obturation de la fenêtre 13.

A l'inverse, lorsqu'un opérateur actionne la poignée de commande 14 de manière à effectuer la fermeture de la porte, la poignée de commande 14 quitte la deuxième position d'extrémité pour atteindre la première position d'extrémité en passant par la position intermédiaire. La course de fermeture de la poignée 14 suit alors le mouvement de rotation inverse au mouvement suivi lors de la course d'ouverture. De la même manière, le volet 15 suit un mouvement inverse au mouvement décrit précédemment.

Il est à noter toutefois que le volet 15 n'occupe sa position d'obturation de la fenêtre 13 que lorsque la poignée de commande 14 occupe sa première position d'extrémité plaçant la porte dans sa position fermée / verrouillée. Lorsque la poignée 14 occupe une position située entre sa position intermédiaire et sa première position d'extrémité, la porte étant fermée mais non encore verrouillée, le volet 15 reste au moins partiellement ouvert. Cela permet d'éviter tout risque de mise en pression interne excessive de l'aéronef tant que la fermeture et le verrouillage de la porte ne sont pas assurés.

Dans un mode de réalisation de l'invention, le dimensionnement de la poignée de commande interne 14, du dispositif de commande du volet et du volet 15 est prévu de sorte que le volet 15 est utilisé comme moyen auxiliaire d'augmentation de l'effort de manoeuvre de la poignée de commande interne 14 de porte en cas de pressurisation de l'aéronef. Un exemple non limitatif de dimensionnement du dispositif de commande du volet 15 va maintenant être décrit en référence à la figure 2.

On considère le volet 15 en position d'obturation et la poignée de commande interne 14 dans sa première position d'extrémité. La pression Pi à l'intérieur de l'aéronef est supposée supérieure à la pression Pe à l'extérieur. On note r1 et r2 les rayons des pignons respectivement 21 et 23. La longueur du bras de levier reliant la poignée de commande interne 14 à l'arbre 20 est notée a. Le levier 24 est de longueur b. On note c la longueur du bras de levier formé par la distance séparant l'axe de la charnière 27 à l'extrémité de la bielle de commande 25 reliée au levier 24.

L'effort de pression exercée sur le volet s'écrit S.ΔP, où S est la surface du volet et ΔP=Pi-Pe la différence de pression. Cet effort de pression, appliquée à la distance d de l'axe de la charnière 27, crée un moment S.ΔP.d qui maintient le volet en position d'obturation. L'actionnement de la poignée de commande interne 14 de la première position d'extrémité vers la deuxième position d'extrémité se traduit par un mouvement de rotation du levier 24 dans le sens horaire selon la figure 2 par rapport à l'axe B. La rotation du levier 24 exerce un effort d'ouverture Fb par l'intermédiaire de la bielle de commande 25. Cet effort Fb, avec le bras de levier c, crée un moment d'ouverture de volet Fb.a appliqué au palier 26 par rapport à l'axe de la charnière 27. La condition d'ouverture du volet s'écrit Fb.c=S.ΔP.d. Cet effort Fb crée sur le pignon 23 un moment d'ouverture Me2=Fb.b par l'intermédiaire du levier 24. Le pignon 21 subit un moment Mel=Fb.b.r1/r2. L'effort d'actionnement ΔL à exercer à la poignée de commande interne 14 doit être alors de ΔL=Me1/a. Ainsi, l'effort d'actionnement s'écrit :

$$\Delta L = S.\Delta P.d/c.r1/r2.b/a$$

Cet effort d'actionnement d'ouverture ΔL dépend de la différence de pression ΔP. Il s'ajoute à l'effort d'actionnement L correspondant à l'effort nécessaire pour actionner la poignée de commande interne 14 en absence de différence de pression. Cet effort L est essentiellement dû aux frottements de la porte sur la structure d'encadrement, notamment aux frottements du joint d'étanchéité 28 contre la bordure interne 30 de la fenêtre d'ouverture 13, et des frottements entre les butées de la porte et les butées de la structure d'encadrement. Il est de l'ordre de 180 N pour ΔP≈0. Aussi l'effort total d'actionnement d'ouverture est TL = L + ΔL.

Le dimensionnement du dispositif de commande du volet 15 doit permettre d'une part la rotation alternée du volet 15 lors de l'actionnement d'ouverture de la poignée de commande interne 14, et d'autre part répondre aux exigences réglementaires concernant l'effort d'actionnement d'ouverture à fournir en présence ou absence de différence de pression.

Par exemple, pour les valeurs suivantes :

    S = 0,05 m2   c = 0,02 m   r1 = 0,06 m
    a = 0,36 m    d = 0,2 m    r2 = 0,04 m
    b = 0,035 m

on obtient :

$$TL \approx 180 + 0,073 \ \Delta P$$

Certaines exigences réglementaires peuvent ainsi être respectées. Il est ainsi demandé qu'en absence de différence de pression, l'effort à fournir pour effectuer l'ouverture de la porte n'excède pas 200N. De plus, il doit être possible d'effectuer l'ouverture d'une porte en situation de secours avec un effort maximal de 334 N lorsque l'aéronef est soumis à une différence de pression ΔP de l'ordre de 0,25 psi. Enfin, il est également demandé qu'en absence de moyens dédiés assurant le verrouillage de la porte en vol, il soit impossible d'effectuer l'ouverture de la porte. Pour cela, l'effort d'ouverture doit être de l'ordre de 1360 N pour une différence de pression de 2 psi. Selon l'exemple de dimensionnement de l'invention, l'effort d'actionnement d'ouverture de la poignée de commande 14 du volet 15 est :

$$TL \approx 180 \text{ N pour } \Delta P \approx 0 \text{ psi}$$
$$TL \approx 306 \text{ N pour } \Delta P \approx 0,25 \text{ psi}$$
$$TL \approx 1200 \text{ N pour } \Delta P \approx 2 \text{ psi}$$

Ainsi, le dispositif de commande du volet permet d'une part d'assurer une rotation alternée du volet 15 lors de l'actionnement d'ouverture de la poignée de commande interne, et d'autre part de répondre aux exigences réglementaires concernant la valeur de l'effort d'actionnement d'ouverture de la poignée de commande interne de la porte d'aéronef.

Dans le mode de réalisation préféré de l'invention qui vient d'être décrit, le dispositif de commande du volet 15 comprend un engrenage comportant les deux pignons 21 et 23. Cependant, tout autre dispositif mécanique apte à entraîner, lors de la course d'ouverture de la poignée de commande interne 14, une rotation alternée du volet 15 par rapport à son axe C peut être utilisé sans sortir du cadre de l'invention. Par exemple, un système bielle manivelle associé à un guide permettant de transformer le mouvement rotatif de la manivelle en mouvement alternatif de va et vient en translation peut également être utilisé. Cependant, l'engrenage 21, 23 utilisé dans le mode de réalisation préféré présente une solution de grande fiabilité puisqu'il ne présente pas de risque de blocage en position intermédiaire dû par exemple à un arc-boutement d'une pièce mécanique.

Dans un mode de réalisation de l'invention non représenté, une pluralité de fenêtres d'ouverture 13 est prévue et disposée dans la porte parallèlement les unes aux autres. Chaque fenêtre d'ouverture 13 est normalement fermée par un volet 15 et s'ouvrant par rotation autour d'un axe parallèle aux axes A et B. Les volets 15 sont reliés chacun au dispositif de commande, lui-même actionné directement par la poignée de commande interne. Ainsi, chaque volet a un mouvement similaire au volet 15 décrit dans le mode de réalisation préféré de l'invention et représenté notamment dans les figures.

## Revendications

**1.** Porte d'aéronef pressurisé comprenant
au moins un organe de commande (14) d'ouverture et de fermeture de la porte conçu pour placer successivement, durant une course d'ouverture entre une première position d'extrémité et une seconde position d'extrémité opposée à la première, la porte en position fermée / verrouillée, en position fermée / déverrouillée, puis en position ouverte,
au moins une fenêtre d'ouverture (13) normalement fermée par un volet de mise à l'air libre (15),
l'organe de commande (14) étant relié au volet (15) par un dispositif de commande du volet,
ledit dispositif de commande du volet étant **caractérisé en ce qu'**il est commandé par ledit organe de commande (14), et conçu de sorte que le volet (15) occupe successivement, durant la course d'ouverture de l'organe de commande (14) :

- une position d'obturation de ladite fenêtre d'ouverture (13) lorsque l'organe de commande (14) occupe sa première position d'extrémité plaçant la porte dans sa position fermée / verrouillée ;
- une position au moins partiellement ouverte avant que la porte n'occupe sa position fermée / déverrouillée ;
- puis à nouveau la position d'obturation de ladite fenêtre d'ouverture (13) lorsque l'organe de commande (14) occupe sa deuxième position d'extrémité plaçant la porte dans sa position ouverte.

**2.** Porte d'aéronef pressurisé selon la revendication 1 **caractérisée en ce que** le volet (15) occupe une position d'ouverture maximale lorsque l'organe de commande (14) occupe une position intermédiaire, ladite position intermédiaire étant située entre la première position d'extrémité et la deuxième position d'extrémité et plaçant la porte dans sa position fermée / déverrouillée.

**3.** Porte d'aéronef pressurisé selon la revendication 2 **caractérisée en ce que** le volet (15) s'ouvre progressivement durant la course d'ouverture de l'organe de commande (14) entre la première position d'extrémité et la position intermédiaire.

**4.** Porte d'aéronef pressurisé selon la revendication 2 ou 3 **caractérisée en ce que** le volet (15) se ferme progressivement durant la course d'ouverture de l'organe de commande (14) entre la position intermédiaire et la deuxième position d'extrémité.

**5.** Porte d'aéronef pressurisé selon l'une des revendications 1 à 4 **caractérisée en ce que** le volet (15) occupe sa position d'obturation de ladite fenêtre d'ouverture (13) avant que l'organe de commande (14) n'occupe sa deuxième position d'extrémité plaçant la porte dans sa position ouverte.

**6.** Porte d'aéronef pressurisé selon l'une des revendications 1 à 5 **caractérisée en ce que** ledit dispositif de commande du volet est conçu de sorte que, l'organe de commande (14) occupant sensiblement sa première position d'extrémité et le volet (15) occupant sensiblement sa position d'obturation, un effort de pression appliqué au volet (15) dans le sens de la fermeture du volet (15) par une pression interne de l'aéronef supérieure à une pression externe crée un moment de fermeture appliqué à l'organe de commande (14) et orienté de manière à forcer l'organe de commande (14) à occuper sa première position d'extrémité.

7. Porte d'aéronef pressurisé selon la revendication 6 **caractérisée en ce que**, le volet (15) présentant un axe de rotation (C) sensiblement disposé en une extrémité du volet (15) et ledit effort de pression appliqué au volet (15) créant un moment de pression par rapport audit axe de rotation (C), ledit moment de fermeture appliqué à l'organe de commande (14) présente une intensité supérieure à celle dudit moment de pression.

8. Porte d'aéronef pressurisé selon l'une quelconque des revendications 1 à 7 **caractérisée en ce que** le dispositif de commande comprend un engrenage (21, 23).

9. Porte d'aéronef pressurisé selon l'une quelconque des revendications 1 à 8 **caractérisée en ce que** le volet (15) contient un hublot d'observation (16).

10. Porte d'aéronef pressurisé selon l'une quelconque des revendications 1 à 9 **caractérisée en ce que** la porte comprend une pluralité de fenêtres d'ouverture (13) normalement fermées chacune par un volet de mise à l'air libre (15).

**Claims**

1. Pressurised aircraft door comprising
   at least one door opening and closing control member (14) designed to successively place the door in a closed / locked position, closed / unlocked position and then in the open position during an opening movement between a first end position of the control member and a second end position opposite to the first,
   at least one opening window (13) normally closed by a vent flap (15),
   the control member (14) being connected to the flap (15) by a flap control member,
   said flap control member being **characterised in that** it is controlled by said control member (14), and is designed such that the flap (15) occupies the following positions in sequence during the opening movement of the control member (14):

   - a closing position of said opening window (13) when the control member (14) occupies its first end position putting the door in its closed / locked position;
   - an at least partially open position before the door is in its closed / unlocked position;
   - then once again the closing position of said opening window (13) when the control member (14) occupies its second end position putting the door in its open position.

2. Pressurised aircraft door according to claim 1, **characterised in that** the flap (15) is in a maximum opening position when the control member (14) is in an intermediate position, said intermediate position being located between the first end position and the second end position, putting the door in its closed / unlocked position.

3. Pressurised aircraft door according to claim 2, **characterised in that** the flap (15) opens progressively during the opening movement of the control member (14) between the first end position and the intermediate position.

4. Pressurised aircraft door according to claim 2 or 3, **characterised in that** the flap (15) closes progressively during the opening movement of the control member (14) between the intermediate position and the second end position.

5. Pressurised aircraft door according to one of claims 1 to 4, **characterised in that** the flap (15) occupies its closing position of said opening window (13) before the control member (14) reaches its second end position putting the door in its open position.

6. Pressurised aircraft door according to one of claims 1 to 5, **characterised in that** said flap control member is designed such that when the control member (14) is approximately in its first end position and the flap (15) is approximately in its closing position, a pressure force applied to the flap (15) in the flap closing direction due to the internal pressure in the aircraft exceeding the external pressure creates a closing moment applied to the control member (14) and oriented so as to force the control member (14) to be in its first end position.

7. Pressurised aircraft door according to claim 6, **characterised in that** the flap (15) having a rotation axis (C) approximately at one end of the flap (15) and said pressure force applied to the flap (15) creating a pressure moment about said axis of rotation (C), said closing moment applied to the control member (14) is greater than said pressure moment.

8. Pressurised aircraft door according to any one of claims 1 to 7, **characterised in that** the control member comprises a gearwheel (21, 23).

9. Pressurised aircraft door according to any one of claims 1 to 8, **characterised in that** the flap (15) contains an observation window (16).

10. Pressurised aircraft window according to any one of claims 1 to 9, **characterised in that** the door comprises a plurality of opening windows (13) each normally closed by a vent flap (15).

**Patentansprüche**

1. Flugzeugtür für einem Flugzeug mit Druckausgleich, wenigstens ein Steuerorgan (14) zum Öffnen und Schließen der Tür umfassend, so konzipiert, dass während eines Öffnungswegs zwischen einer ersten Endstellung und einer der ersten entgegengesetzten zweiten Endstellung die Tür sich in geschlossener/ verriegelter Position, in geschlossener/unverriegelter Position, dann in geöffneter Position befindet, wenigstens ein Öffnungsfenster (13), normalerweise verschlossen durch eine Außenbelüftungsklappe (15),
wobei das Steuerorgan (14) mit der Klappe (15) durch eine Klappenbetätigungsvorrichtung verbunden ist,
die genannte Klappenbetätigungsvorrichtung dabei **dadurch gekennzeichnet ist, dass** sie durch das genannte Steuerorgan (14) gesteuert wird und so konzipiert ist, dass die Klappe (15) sukzessive, während des Öffnungswegs des Steuerorgans (14) einnimmt:

- eine Verschlussposition des genannten Öffnungsfensters (13), wenn das Steuerorgan (14) seine erste, die Tür in ihre geschlossene/verriegelte Position versetzende Endstellung einnimmt;
- eine wenigstens partiell geöffnete Position, bevor die Tür ihre geschlossene/unverriegelte Position einnimmt;
- dann wieder die Verschlussposition des genannten Öffnungsfensters (13), wenn das Steuerorgan (14) seine zweite, die Tür in ihre geöffnete Position versetzende Endstellung einnimmt.

2. Flugzeugtür für einem Flugzeug mit Druckausgleich nach Anspruch 1, **dadurch gekennzeichnet, dass** die genannte Klappe (15) eine maximale Öffnungsposition einnimmt, wenn das Steuerorgan (14) eine Zwischenstellung einnimmt, wobei die genannte Zwischenstellung sich zwischen der ersten Endstellung und der zweiten Endstellung befindet und die Tür in ihre geschlossene/unverriegelte Position versetzt.

3. Flugzeugtür für einem Flugzeug mit Druckausgleich nach Anspruch 2, **dadurch gekennzeichnet, dass** die Klappe (15) sich progressiv öffnet während des Öffnungswegs des Steuerorgans (14) zwischen der ersten Endstellung und der Zwischenstellung.

4. Flugzeugtür für einem Flugzeug mit Druckausgleich nach Anspruch 2 oder 3, **dadurch gekennzeichnet, dass** die Klappe (15) sich progressiv schließt während des Öffnungswegs des Steuerorgans (14) zwischen der Zwischenstellung und der zweiten Endstellung.

5. Flugzeugtür für einem Flugzeug mit Druckausgleich nach einem der Ansprüche 1 bis 4, **dadurch gekennzeichnet, dass** die Klappe (15) ihre Verschlussposition des genannten Öffnungsfensters (13) einnimmt bevor das Steuerorgan (14) seine zweite, die Tür in ihre geöffnete Stellung versetzende Stellung einnimmt.

6. Flugzeugtür für einem Flugzeug mit Druckausgleich nach einem der Ansprüche 1 bis 5, **dadurch gekennzeichnet, dass** die genannte Klappenbetätigungsvorrichtung so konzipiert ist, dass -während das Steuerorgan (14) im Wesentlichen seine erste Endstellung einnimmt und die Klappe (15) im Wesentlichen ihre Verschlussposition einnimmt -, eine auf die Klappe (15) in Schließrichtung der Klappe (15) wirkende Druckkraft, verursacht durch einen Flugzeug-Innendruck höher als ein Außendruck, ein Schließmnment erzeugt, das auf das Steuerorgan (14) einwirkt und so gerichtet ist, dass es das Steuerorgan (14) zwingt, seine erste Endstellung einzunehmen.

7. Flugzeugtür für einem Flugzeug mit Druckausgleich nach Anspruch 6, **dadurch gekennzeichnet** - wobei die Klappe (15) eine im Wesentlichen an einem Ende der Klappe (15) angeordnete Drehachse (C) aufweist und die genannte auf die Klappe (15) wirkende Druckkraft in Bezug auf die genannte Drehachse (C) ein Druckmoment erzeugt -, dass das genannte auf das Steuerorgan (14) einwirkende Schließmoment stärker ist als das genannte Druckmoment.

8. Flugzeugtür für einem Flugzeug mit Druckausgleich nach einem der Ansprüche 1 bis 7, **dadurch gekennzeichnet, dass** die Betätigungsvorrichtung ein Getriebe (21, 23) umfasst.

9. Flugzeugtür für einem Flugzeug mit Druckausgleich nach einem der Ansprüche 1 bis 8, dadurch gekennzeichnet, dass die Klappe (15) ein Beobachtungsfenster (16) umfasst.

10. Flugzeugtür für einem Flugzeug mit Druckausgleich nach einem der Ansprüche 1 bis 9, **dadurch gekennzeichnet, dass** die Tür eine Vielzahl Öffnungsfenster (13) umfasst, jedes normalerweise verschlossen durch eine Außenbelüftungsklappe (15).

FIG.1

FIG.2

FIG.3A

FIG.3B

FIG.3C

**EP 2 234 874 B1**

**RÉFÉRENCES CITÉES DANS LA DESCRIPTION**

**Documents brevets cités dans la description**

- FR 2686568

- US 5337977 A